# EUROPEAN PATENT APPLICATION

(11) **EP 3 975 012 A1**
(43) Date of publication of application: **30.03.2022**
(21) Application number: 20315424.0
(22) Date of filing: 29.09.2020
(51) Int. Cl.: G06F 21/32, G06F 21/34, G06Q 20/10, G06Q 20/32, H04L 29/06, G06Q 20/40

(54) **METHOD FOR MANAGING A PIN CODE IN A BIOMETRIC SMART CARD**

(71) Applicant: Thales DIS France SA, 92190 Meudon (FR)
(72) Inventor: Tuilier, Edmond, 13881 Gemenos Cedex (FR); Martin, Jean-Pierre, 13881 Gemenos Cedex (FR)
(74) Representative: Grevin, Emmanuel

(57) **Abstract**

The invention is a method for managing, in a card, a PIN code having a value and a state which can be set either to locked or to unlocked. The card triggers the generation of a cryptogram only if the user has been successfully authenticated using its biometric sensor. The card sends the cryptogram to a remote server (40) via a communicating device (30). Only if the cryptogram is found to be valid, the remote server identifies an admin code and a user code value both associated to the card and sends the admin code and the user code value to the communicating device. The communicating device provides the user with the user code value through its user interface, identifies a data comprising the admin code then sends said data to the card which sets the state of the PIN code to unlocked by using said data.

## Description

### (Field of the invention)

The present invention relates to methods for managing a PIN code in a smart card. It relates particularly to PIN code renewal or unlocking process in biometric smart cards.

### (Background of the invention)

Smart cards are portable small devices comprising a memory, a microprocessor and an operating system for computing treatments. They may comprise services applications like payment applications. Such secure elements may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which provides them with electric power either in contact mode or contactless mode.

A biometric smart card contains at least one biometric sensor, like a fingerprint sensor, which can contribute to the authentication of the user of the smartcard.

When performing transactions with a biometric card, most often, the cardholder is requested to give an approval through the biometric sensor of the card. Consequently, the PIN code is required less and less in practice and the user may forget the value of the PIN code.

When a genuine user has lost or forgotten the PIN code of a smart card, a new card may be manufactured and sent to the user which is informed of the new PIN code value through the usual flow. For instance, the user may receive a separate letter comprising the new PIN code value. Such a card replacement takes time and is costly.

There is need to solve the above-presented problem.

### (Summary of the Invention)

The invention aims at solving the above mentioned technical problem.

An object of the present invention is a method for managing a PIN code in a biometric card which is associated to a user. The PIN code has a value and a state which can be set either to locked or to unlocked. The method comprises the steps:
- authenticating the user by the biometric card using a biometric sensor embedded in the biometric card and automatically triggering the generation of a cryptogram specific to the biometric card by the biometric card only if the user has been successfully authenticated;
- sending the cryptogram from the biometric card to a remote server via a communicating device;
- verifying the cryptogram at the remote server and, only if the cryptogram is found to be valid, identifying an admin code and a user code value both allocated to the biometric card;
- sending both the admin code and the user code value from the remote server to the communicating device;
- providing the user with the user code value through a user interface of the communicating device;
- identifying a data comprising the admin code and sending said data from the communicating device to the biometric card; and
- setting the state of the PIN code to unlocked in the biometric card by performing a treatment based on said data in the biometric card.

Advantageously, said data may be devoid of user code value and the PIN code value may remain unchanged in the biometric card.

Advantageously, said data may comprise the user code value and the PIN code value may be updated with said user code value in the biometric card.

Advantageously, the biometric card may send the cryptogram and a identifier of the biometric card to a card reader, the card reader may send the cryptogram, the identifier of the biometric card and a identifier of the card reader to the remote server via the communicating device and the remote server may perform a checking to verify that a pairing of the identifier of the biometric card and the identifier of the card reader has been previously registered and the remote server may send the admin code and the user code value to the communicating device only if said checking is successful.

Advantageously, the biometric card may send the cryptogram to a card reader, the card reader may capture a request from the user using a user interface embedded in the card reader, the card reader may send the cryptogram and a reference of the request to the remote server via the communicating device, the remote server may identify a user code value depending on said reference of the request and the communicating device may include the user code value in said data only if said request is a request for changing the value of the PIN code.

Advantageously, the communicating device may capture a request from the user using a user interface embedded in the communicating device, the communicating device may send a reference of the request to the remote server, the remote server may identify a user code value depending on said reference of the request and the communicating device may include the user code value in said data only if said request is a request for changing the value of the PIN code.

Advantageously, the biometric card may send an identifier of the biometric card to the communicating device, the communicating device may send both an identifier of the communicating device and the identifier of the biometric card to the remote server and the remote server may perform a checking to verify that a pairing of the identifier of the biometric card and the identifier of the communicating device has been previously registered and the remote server may send the admin code and the user code value to the communicating device only if said checking is successful.

Advantageously, the user may be provided with the user code value through the user interface of the communicating device by display or by an audio message.

An object of the present invention is a system for managing a PIN code in a biometric card associated to a user. The PIN code has a value and a state which can be set either to locked or to unlocked. The system comprises a communicating device, a remote server and the biometric card. The biometric card is configured to automatically generate a cryptogram specific to the biometric card only if the user has been successfully authenticated using a biometric sensor embedded in the biometric card. The biometric card is configured to send the cryptogram to the remote server via the communicating device. The remote server is configured to verify the cryptogram and to identify an admin code and a user code value which are both associated to the biometric card, only if the cryptogram is found to be valid by the remote server. The remote server is configured to send both the admin code and the user code value to the communicating device. The communicating device is configured to provide the user with the user code value through a user interface of the communicating device. The communicating device is configured to identify a data comprising the admin code and to send said data to the biometric card. The biometric card is configured to set the state of the PIN code to unlocked in the biometric card by performing a treatment based on said data.

Advantageously, said data may be devoid of user code value and the PIN code value may remain unchanged in the biometric card.

Advantageously, said data may comprise the user code value and the biometric card may be configured to update the PIN code value with said user code value in the biometric card.

Advantageously, said system may comprise a card reader, the biometric card may be configured to send the cryptogram and an identifier of the biometric card to the card reader. The card reader may be configured to send the cryptogram, the identifier of the biometric card and a identifier of the card reader to the remote server via the communicating device. The remote server may be configured to perform a checking to verify that a pairing of the identifier of the biometric card and the identifier of the card reader has been previously registered. The remote server may be configured to send the admin code and the user code value to the communicating device only if said checking is successful.

Advantageously, the system may comprise a card reader, the biometric card may send the cryptogram to the card reader, the card reader may capture a request from the user using a user interface embedded in the card reader and the card reader may send the cryptogram and a reference of the request to the remote server via the communicating device. The remote server may identify a user code value depending on the reference of the request and the communicating device may include the user code value in said data only if said request is a request for changing the value of the PIN code.

Advantageously, the communicating device may be configured to capture a request from the user using a user interface embedded in the communicating device. The communicating device may be configured to send a reference of the request to the remote server. The remote server may be configured to identify a user code value depending on the reference of the request. The communicating device may be configured to include the user code value in said data only if said request is a request for changing the value of the PIN code.

Advantageously, the biometric card may be configured to send an identifier of the biometric card to the communicating device, the communicating device may be configured to send both an identifier of the communicating device and the identifier of the biometric card to the remote server. The remote server may be configured to perform a checking to verify that a pairing of the identifier of the biometric card and the identifier of the communicating device has been previously registered and the remote server may be configured to send the admin code and the user code value to the communicating device only if said checking is successful.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows an exemplary flow diagram to restore a biometric card to a state where it is operational and functional according to a first example of the invention,
- Figure 2 shows an exemplary flow diagram to restore a biometric card to a state where it is operational and functional according to a second example of the invention,
- Figure 3 shows a diagram of architecture of a system for restoring a biometric smart card to a state where it is operational and functional according to a first example of the invention, and
- Figure 4 shows a diagram of architecture of a system for restoring a biometric smart card to a state where it is operational and functional according to a second example of the invention.

### (Detailed description of the preferred embodiments)

The invention may apply to any type of biometric smart card associated to a user and intended to provide a service. The biometric smart card may be a bank smart card or an identity document for instance.

A PIN code, known as PIN (Personal Identification number) is a data having both a state and a secret value supposed to be known by the genuine card holder of a smart card. The cardholder may be authenticated by the card by entering the PIN code value. The PIN code may be in a locked (blocked) state where use of the PIN code is denied by the smart card. The PIN code may be in an unlocked (unblocked) state where use of the PIN code is accepted by the smart card. Usually, after a predefined number of consecutive incorrect presentations of the PIN code, the card sets the PIN code to the locked state.

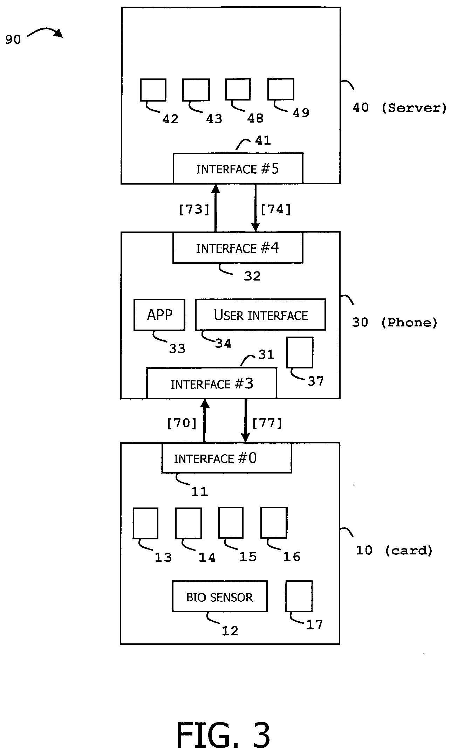

Figure 3 depicts a diagram of architecture of a system for restoring a biometric smart card to a state where it is operational and functional according to an example of the invention.

The system 90 comprises a communicating device 30, a remote server 40 and a biometric smart card 10 associated to a user.

The biometric card has been associated to a user which is supposed to known the PIN code value of the biometric card.

The biometric card comprises a communication interface 11 adapted to exchange data in contact or contactless mode with another hardware device. For instance, the communication interface 11 may allow the card to communicate with the communicating device 30 through Bluetooth Low Energy ^{®} (known as BLE).

The biometric card comprises a biometric sensor 12, and a checking unit 13 able to verify that a biometric data captured by the sensor 12 matches with a preregistered reference value stored in the smart card. The biometric sensor 12 may be designed to capture fingerprint data for instance.

The biometric card comprises a PIN code 16 and an administration unit 15 able to set the PIN code to the locked state when a predefined number of failed attempts of PIN code presentation is reached. The administration unit 15 is able to set the PIN code to the unlocked state according to predefined security rules. Preferably, the administration unit 15 is configured to set the PIN code to the unlocked state only if it is provided with a secret key associated to the PIN code. In one embodiment, the administration unit 15 is configured to update the value of the PIN code 16 with a new value received through the communication interface 11.

The biometric card comprises crypto unit 14 able to generate a cryptogram from a seed value which may come from the outside or be generated internally by the card itself. For instance the crypto unit 14 may use the Triple-DES algorithm to generate the cryptogram. Preferably, the seed value is a random challenge which is originated from the remote server 40.

The biometric card is configured to automatically generate a cryptogram specific to the biometric card only if the user has been successfully authenticated using the biometric sensor 12.

The biometric card is configured to automatically send the generated cryptogram to the remote server 40 via the communicating device 30.

More precisely, the biometric card is configured to automatically send a message 70 comprising the generated cryptogram to the communicating device 30. Alternatively, the biometric card may send the generated cryptogram to the communicating device 30 via an intermediate reader acting as a bridge.

The biometric card may store its own identifier 17 which may be a serial number for instance.

The communicating device 30 may comprise a communication interface 31 configured to communicate with the smart card 10 (via NFC, UWB or BLE for instance). The communicating device comprises a communication interface 32 configured to communicate with remote server. The communication channel between the communicating device 30 and the remote server 40 may be based on any combination comprising a telecom network, the Internet or a private network for instance.

The communicating device 30 may be a smartphone, a tablet, a personal computer for example. The communicating device 30 is configured to send to the remote server 40 a message 73 comprising the cryptogram received from the card 10.

The communicating device 30 may store its own identifier 37 which may be a serial number for instance.

The remote server 40 is a hardware server comprising a processing unit 42 and instructions 43 which cause the remote server 40 to verify the cryptogram and to identify an admin code 49 (administration code) and a user code value 48 which are both allocated to the biometric card, only if the cryptogram is found to be valid by the remote server.

The remote server is configured to send a message 74 comprising both the identified admin code 49 and the identified user code value 48 to the communicating device.

The communicating device comprises a user interface 34 and a software application 33. The communicating device is configured to provide the user with the user code value 48 through the user interface 34. Preferably, the software application 33 is configured to extract the user code value 48 from the message received from the remote server and to trigger the rendering of the user code value 48 to the user through the user interface 34. The user may get the user code value 48 by display or by an audio message for instance.

The communicating device is configured to analyze the message received from the remote server and to identify a data comprising the admin code 49. The communicating device is configured to send a message 77 comprising said data to the biometric card via its communication interface 31.

The biometric card is configured to set the state of the PIN code 16 to Unlocked in the biometric card by performing a treatment based on the data received from the communicating device. In particular, the biometric card may check the validity of the received admin code 49 and set the PIN code state to Unlocked only if the received admin code 49 is valid.

Advantageously, the biometric card may also check that the user has been successfully authenticated through the biometric sensor during the same session before authorizing the change of the PIN code state to Unlocked. For example a flag may be set as soon as the user has been successfully authenticated via the biometric sensor, knowing that the flag is automatically reset when the card is no more powered.

The user may request that the PIN code value is kept unchanged in the biometric card. (i.e. only unblocking is requested) Such request may be entered through the user interface 34 of the communication device and handled by the software application 33. The message 73 sent from the communication device to the remote server may comprise an indicator reflecting the user's request (to kept the PIN code value unchanged). The server may retrieve the current PIN code value from its own repository and use it as user code value 48 which is sent to the communication device. Then the data identified by the communication device may be devoid of user code value and, in the biometric card, the state of the PIN code may change while the PIN code value remains unchanged.

The user may request that the PIN code value is renewed in the biometric card. Such request may be entered through the user interface 34 of the communication device and handled by the software application 33. The message 73 sent from the communication device to the remote server may comprise an indicator reflecting the user's request (to change the PIN code value). The server may identify a new PIN code value and use it as user code value 48 which is sent to the communication device. Then, the data identified by the communication device may contain the user code value. In other words, the biometric card may receive a data comprising both the admin code 49 and the user code value 48. In this case the biometric card may be configured to change the state of the PIN code and to replace the value of the PIN code value with the received user code value 48.

The biometric card 10 may be configured to send an identifier 17 of the biometric card to the communicating device. The communicating device may be configured to send both an identifier 37 of the communicating device and the identifier 17 of the biometric card to the remote server. The remote server may be configured to perform a checking to verify that a pairing of the identifier 17 of the biometric card and the identifier 37 of the communicating device have been previously registered. The remote server may be configured to send the admin code 49 and the user code value 48 to the communicating device only if the checking of the pairing is successful.

Thanks to such an embodiment, the update of the content of the biometric card can only be made at the request of a user having at his disposal both the card and the communicating device which have been bound in a previous stage.

The software application 33 may be designed to allow the registering of the pairing of the biometric card and the communicating device by collecting both the identifier 17 of the biometric card and the identifier 37 of the communicating device and declaring the pairing to the remote server during a registration phase.

In one embodiment, the software application 33 and the card biometric card 10 may be personalized so as to comprise one or several secret keys allowing to establish a secure communication channel between the software application 33 and the card biometric card 10. Such secret keys may be identified during a prior pairing phase.

In one embodiment, the remote server 40 may generate a script comprising a set of ordered commands to be executed by the biometric card. Advantageously, a subset of the commands may be protected by a key stored in the biometric card 10. The remote server 40 may send the script to the communicating device 30 which may send the commands of the script to the biometric card through one or several messages. The script may comprise a command for presenting the admin code 49 (and optionally the user code value 48) to the biometric card 10.

The script may comprise a PIN Change/Unblock command that allows either PIN to be unlocked (based on a Triple DES MAC for instance) or PIN to be changed (with a ciphered new PIN value and a Triple DES MAC). When a command like PIN Change/Unblock command is used, the admin code 49 is the MAC (Message Authentication Code).

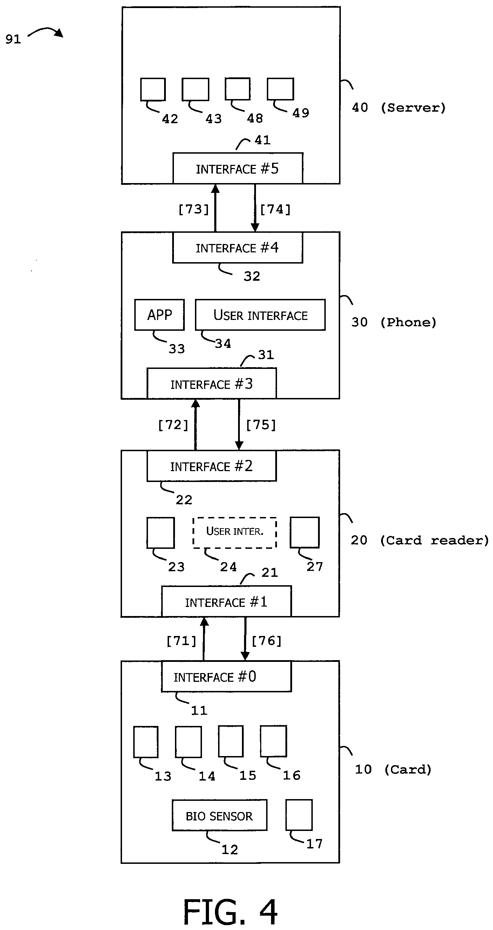

Figure 4 depicts a diagram of architecture of a system for restoring a biometric smart card to a state where it is operational and functional according to another example of the invention.

The system 91 is similar to the system 90 described at Figure 3 with the following differences: The system 91 comprises a card reader 20 and components of the system behave as explained below.

The communication interface 11 of the biometric card is adapted to exchange data in contact or contactless mode with the card reader 20. For instance, the communication interface 11 may allow the card to communicate with the card reader 20 in contact mode according to the protocols defined by ISO/IEC 7816 or in contactless mode according to a protocol complying with ISO/IEC 14443, Mifare^{®}, Felica^{®}, ISO/IEC 15693 or NFC Forum Tag specifications.

The biometric card is configured to automatically send the generated cryptogram to the remote server 40 via both the card reader 20 and the communicating device 30. More precisely, the biometric card is configured to send to the card reader 20 a message 71 comprising the generated cryptogram and an identifier 17 of the biometric card. The identifier 17 allows to uniquely identify the biometric card.

The biometric card may be a banking card intended to be used by its associated user (i.e. bank customer) for payment or cash withdrawal for instance.

The card reader 20 may comprise a first communication interface 21 configured to communicate with the smart card 10 and a second communication interface 22 configured to communicate with the communicating device 30. (via NFC, Wi-Fi, Bluetooth ^{®}, BLE or Ultra-Wide Band known as UWB for instance) In one embodiment, the card reader 20 may communicate with the communicating device through a wired link.

The card reader 20 may comprise a memory storing an identifier 27 of the card reader 20. The identifier 27 allows to uniquely identify the card reader 20. For example, the identifier 27 may be a serial number.

The card reader 20 may be configured to send to the communicating device a message 72 comprising the generated cryptogram, the identifier 17 of the biometric card and the identifier 27 of the card reader.

The communicating device 30 may comprise a communication interface 31 configured to communicate with the card reader 20.

The remote server 40 may be configured to perform a checking to verify that a pairing of the identifier 17 of the biometric card and the identifier 27 of the card reader have been previously registered and to send the admin code 49 and the user code value 48 to the communicating device only if the checking of the pairing is successful.

The communicating device may be configured to analyze the message received from the remote server and to identify a data comprising the admin code 49. The communicating device may be configured to send to the card reader a message 75 comprising the identified data. The card reader 20 may be configured to send to the card 10 a message 76 comprising data received from the communicating device.

The card reader 20 may comprise a user interface 24. The card reader may capture a request from the user using the user interface 24. The card reader may send the cryptogram and a reference of the request to the remote server via the communicating device. The remote server may be configured to identify the user code value 48 depending on the reference of the request and the communicating device may be configured to send the user code value 48 to the card reader only if said request is a request for changing the value of the PIN code.

The user may request that the PIN code value is kept unchanged or replaced in the biometric card through the user interface 24 of the card reader device. The message 72 sent from the card reader to the communication device may comprise an indicator reflecting the user's request (to kept the PIN code value unchanged or to renew the PIN code value) so that both the communicating device and the server are aware of the type of request. The communication device may be configured to send (or not) the user code value 48 to the card reader depending of the type of user's request.

The card reader may comprise a processing unit 23. The remote server 40 may generate a script comprising a set of ordered commands to be executed by the biometric card. Advantageously, a subset of the commands may be protected by a key stored in the biometric card 10. The remote server 40 may send the script to the card reader 20 via the communicating device 30. The processing unit 23 may send the commands of the script to the biometric card. The script may comprise a command for presenting the admin code 49 (and optionally the user code value 48) to the biometric card 10.

The software application 33 may be designed to allow the registering of the pairing of the biometric card and the card reader by collecting both the identifier 17 of the biometric card and the identifier 27 of the card reader and declaring the pairing to the remote server during a registration phase.

The card reader may be a hardware device comprising a user interface designed to allow the cardholder to request an enrolment of a biometric reference and the PIN code renewal (or PIN code unlocking). For instance, the card reader may embed two buttons each being dedicated to one of these requests. Features of the card reader may be limited to communication via a contactless protocol (like Bluetooth, BLE or UWB for instance) with a communicating device, communication with a biometric card, powering of the biometric card, treatments required for the biometric reference enrolment and treatments required for the PIN code renewal (or unblocking).

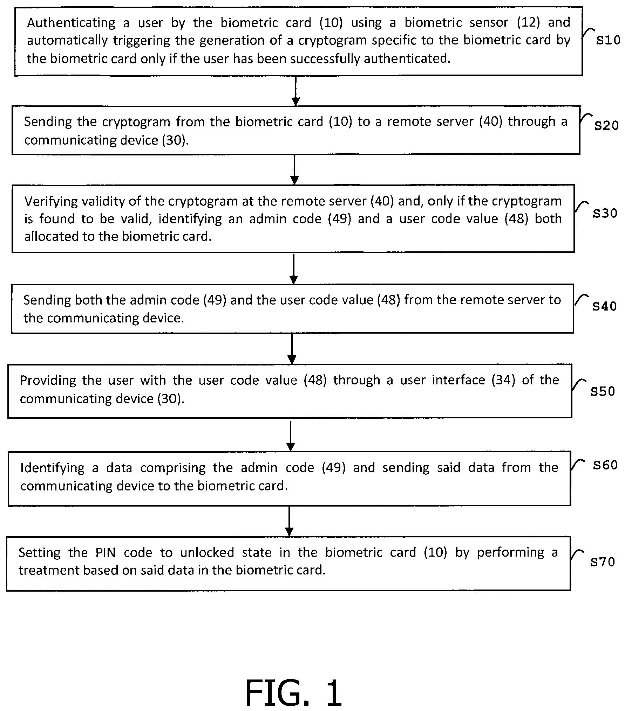

Figure 1 shows an exemplary flow diagram to restore a biometric card to a state where it is operational and functional according to a first example of the invention.

In this example, the biometric smart card, the communicating device and the remote server may be those of the system 90 detailed at Figure 3.

The biometric smartcard 10 embeds a secure element (chip) comprising a hardware processing unit, memory and an operating system designed to contribute to bank services. The biometric card also comprises a reference biometric data which has been enrolled by the user (i.e. bank customer). The biometric card may use the reference biometric data to check the genuineness of a biometric data captured by its sensor.

At step S10, the biometric card 10 authenticates the cardholder using its biometric sensor and automatically triggers the generation of a cryptogram specific to the biometric card only if the cardholder (user) has been successfully authenticated. The biometric card 10 has a key prestored in its memory. The biometric card 10 may use this key to generate the cryptogram or derive a session key from the key prestored in its memory and generate the cryptogram using the session key. In both cases, the card uses a random value (also known as challenge or salt) to generate the cryptogram. The random value may come from the biometric card itself or from the remote server (via the communicating device). The server is assumed to have the relevant key needed to check the validity of the received cryptogram.

At step S20, the biometric card sends the cryptogram to the remote server through the communicating device.

At step S30, the remote server verifies the validity of the received cryptogram and, only if the cryptogram is found to be valid, identifies an admin code 49 and a user code value 48 which are both associated to the biometric card. The card may have sent its own identifier along with the cryptogram to ease the identification of the biometric card by the remote server.

At step S40, the remote server sends both the admin code and the user code value to the communicating device.

At step S50, the communicating device provides the user with the user code value 48 through its own user interface. Preferably, the user code value is displayed. The access to the display of communication device by the user may be unlocked by credentials presented by the user to the communicating device. For instance, the user may have to enter a secret code or present his finger to a biometric sensor of the communicating device to authenticate.

At step S60, the communicating device identifies a data comprising the admin code 49 then sends the identified data to the biometric card. The user may have requested either the unlocking or the renewal of the PIN code of the biometric card. If the user has requested the unlocking of the PIN code, the identified data may not contain the user code value 48. If the user has requested the change of the PIN code value, the identified data do contain the user code value 48.

At step S70, the biometric card 10 performs a treatment based on the data received from the communication device in order to set the PIN code to unlocked state in the biometric card. Additionally, if the identified data contains the user code value 48, the biometric card may update its own PIN code value with the received user code value 48 once the state of the PIN code has been set to unlocked.

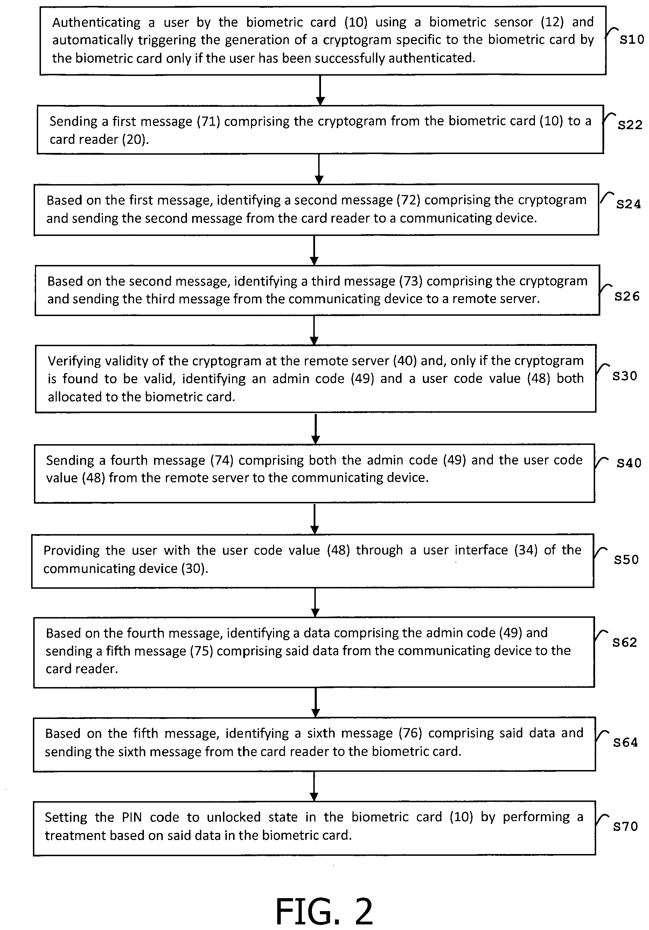

Figure 2 shows a second exemplary flow diagram to restore a biometric card to a state where it is operational and functional according to an example of the invention.

In this example, the biometric smart card, the communicating device and the remote server may be those of the system 91 detailed at Figure 4.

The flow is similar to the one of Figure 1 with the following differences: Steps 22 to 26 replace step 20 and steps 62 to 64 replace step 60.

At step S22, the biometric card sends a first message 71 comprising the cryptogram to the card reader 20.

At step S24, based on the first message 71, the card reader identifies a second message 72 comprising the cryptogram and sends it to a communicating device.

At step S26, based on the second message 72, the communicating device 30 identifies a third message 73 comprising the cryptogram and sends it to the remote server 40.

At step S62, based on the fourth message 74 received from the remote server, the communicating device identifies a data comprising the admin code 49 and sends a fifth message 75 comprising the identified data to the card reader.

At step S64, based on the fifth message 75, the card reader sends a sixth message 76 comprising the identified to the biometric card.

The biometric card 10 may include its own identifier along with the cryptogram into the message 71 it sends to the card reader 20. The card reader may include its own identifier along with the cryptogram and the identifier of the biometric card into the message 72 it sends to the communicating device. The message 73 sent to the remote server 40 by the communicating device 30 may include the cryptogram, the identifier of the biometric card and the identifier of the card reader. The remote server may perform a checking to verify that a pairing of the identifier of the biometric card and the identifier of the card reader have been previously registered. The remote server may send the admin code 49 and the user code value 48 to the communicating device only if the checking is successful. Such a scheme allows to avoid a malevolent person which got the biometric card without the specific card reader associated to the biometric card to request change of the PIN code in the biometric card.

The card reader may get a request from the cardholder using the user interface 24 embedded in the card reader. The request may be either to unlock the PIN code or to renew the PIN code. The card reader may send the cryptogram and a data reflecting the nature of the request to the remote server via the communicating device. The communicating device may keep a track of the nature of the request before forwarding the message to the remote server. The remote server may identify a user code value which depends on the nature of the request: either the current PIN code value if an unlocking has been requested or a new PIN code value if a renewal has been requested. The communicating device may include the user code value 48 in the data it sends to the card reader only if a renewal of the PIN code has been requested.

In all cases, (whether the card reader is used or not), the cardholder may specify his request using the user interface of the communicating device. The communicating device may capture the request from the user using its user interface 34. The communicating device may keep a track of the type of request and send a reference of the request to the remote server. The remote server may thus identify a user code value 48 depending on the request reference. The communicating device may send the user code value to the biometric card (via the card reader or not) only if the request is a request for changing the value of the PIN code.

In all cases, (whether the card reader is used or not), a pre-registered pairing of the communication device and the biometric card may be checked by the remote server. The biometric card may send its own identifier to the communicating device (via the card reader or not). The communicating device may send both its own identifier and the identifier of the biometric card to the remote server. The remote server may perform a checking to verify that a pairing of the identifier of the biometric card and the identifier of the communicating device have been previously registered. The remote server may send the admin code 49 and the user code value 48 to the communicating device only if the checking of the pairing is successful. Such an embodiment allows to avoid a malevolent person which got the biometric card without the specific communicating device associated to the biometric card to request change of the PIN code in the biometric card.

In all cases, (whether the card reader is used or not), a secure channel may be established between the biometric card and the remote server through the communication device (via the card reader or not). The secure channel may comply with GlobalPlatform Card Specification Version 2.3, Oct 2015 or any relevant secure protocols. The secure channel may be established between the biometric card 10 and the server 40 by using keys pre-stored on both sides. Preferably, the keys are symmetric, alternatively the keys may belong to a public/private pair according to PKI scheme. Due to the security provided by the secure channel, the communication device is not able to access the content of data exchanged between the card and the server through the secure channel. Thus, the remote server may send an additional message comprising the user code value 48 to the communication device, so that the communication device can provide the user with the user code value 48.

Thanks to the invention, it is possible to securely unlock and/or update the current PIN code in a biometric smart card. In particular, unlocking and/or updating of the value of the current PIN code of a biometric card may be done without the need for the cardholder to go to a specific location since the server can be accessed remotely. In particular, there is no need for the user to go near an ATM (Automated Teller Machine) or an on-line POS (Point-Of-Sale) when the biometric card is a banking card.

Depending of the security level which is required by the entity which administrates the remote server, several additional checks can be carried out to verify the presence (and the use) of one or more hardware devices near the biometric card.

The invention is not limited to the described embodiments or examples. In particular, the described examples and embodiments may be combined.

The invention is not limited to Banking smart cards and applies to any biometric smart cards allocated to a user.

Although examples of the invention has been detailed in the banking domain, the invention also applies to other domains. For example, the smart card may provide access to a physical building, room or area.

Although examples of the invention has been detailed for a fingerprint sensor, it may apply to cards embedding any biometric sensor targeting various types of data: iris, voice, face, blood or palm print for examples.

## Claims

1. A method for managing a PIN code in a biometric card (10) associated to a user, said PIN code having a value and a state which can be set either to locked or to unlocked,
**characterized in that** the method comprises the steps:
- authenticating said user by the biometric card using a biometric sensor (12) embedded in the biometric card and automatically triggering the generation of a cryptogram specific to the biometric card by the biometric card only if the user has been successfully authenticated,
- sending the cryptogram from the biometric card to a remote server (40) via a communicating device (30),
- verifying the cryptogram at the remote server (40) and, only if the cryptogram is found to be valid, identifying an admin code (49) and a user code value (48) both allocated to the biometric card,
- sending both the admin code (49) and the user code value (48) from the remote server to the communicating device,
- providing the user with the user code value (48) through a user interface (34) of the communicating device,
- identifying a data comprising the admin code (49) and sending said data from the communicating device to the biometric card,
- setting the state of the PIN code to unlocked in the biometric card (10) by performing a treatment based on said data in the biometric card.

2. The method according to claim 1, wherein said data is devoid of user code value (48) and wherein the PIN code value remains unchanged in the biometric card.

3. The method according to claim 1, wherein said data comprises the user code value (48) and wherein the PIN code value is updated with said user code value in the biometric card.

4. The method according to claim 1, wherein the biometric card sends the cryptogram and a identifier of the biometric card to a card reader (20), wherein the card reader sends the cryptogram, the identifier of the biometric card and a identifier of the card reader to the remote server via the communicating device and wherein the remote server performs a checking to verify that a pairing of the identifier of the biometric card and the identifier of the card reader has been previously registered and wherein the remote server sends the admin code (49) and the user code value (48) to the communicating device only if said checking is successful.

5. The method according to claim 1, wherein the biometric card sends the cryptogram to a card reader (20), wherein the card reader captures a request from the user using a user interface embedded (24) in the card reader, wherein the card reader sends the cryptogram and a reference of the request to the remote server via the communicating device, wherein the remote server identifies a user code value (48) depending on said reference of the request and wherein the communicating device includes the user code value (48) in said data only if said request is a request for changing the value of the PIN code.

6. The method according to claim 1, wherein the communicating device captures a request from the user using a user interface (34) embedded in the communicating device, wherein the communicating device sends a reference of the request to the remote server, wherein the remote server identifies a user code value (48) depending on said reference of the request and wherein the communicating device includes the user code value (48) in said data only if said, request is a request for changing the value of the PIN code.

7. The method according to claim 1, wherein the biometric card sends an identifier of the biometric card to the communicating device, wherein the communicating device sends both an identifier of the communicating device and the identifier of the biometric card to the remote server and wherein the remote server performs a checking to verify that a pairing of the identifier of the biometric card and the identifier of the communicating device has been previously registered and wherein the remote server sends the admin code (49) and the user code value (48) to the communicating device only if said checking is successful.

8. The method according to claim 1, wherein the user is provided with the user code value (48) through the user interface of the communicating device by display or by an audio message.

9. A system (90) for managing a PIN code in a biometric card (10) associated to a user, said PIN code having a value and a state which can be set either to locked or to unlocked,
**characterized in that** said system comprises a communicating device (30), a remote server (40) and said biometric card,
**in that** the biometric card is configured to automatically generate a cryptogram specific to the biometric card only if the user has been successfully authenticated using a biometric sensor (12) embedded in the biometric card,
**in that** the biometric card is configured to send the cryptogram to the remote server (40) via the communicating device (30),
**in that** the remote server is configured to verify the cryptogram and to identify an admin code (49) and a user code value (48) both allocated to the biometric card, only if the cryptogram is found to be valid,
**in that** the remote server is configured to send both the admin code (49) and the user code value (48) to the communicating device,
**in that** the communicating device is configured to provide the user with the user code value (48) through a user interface (34) of the communicating device,
**in that** the communicating device is configured to identify a data comprising the admin code (49) and to send said data to the biometric card, and
**in that** the biometric card is configured to set the state of the PIN code to unlocked in the biometric card (10) by performing a treatment based on said data.

10. The system according to claim 9, wherein said data is devoid of user code value (48) and wherein the PIN code value remains unchanged in the biometric card.

11. The system according to claim 9, wherein said data comprises the user code value (48) and wherein the biometric card is configured to update the PIN code value with said user code value in the biometric card.

12. The system according to claim 9, wherein said system comprises a card reader (20), wherein the biometric card is configured to send the cryptogram and a identifier of the biometric card to the card reader, wherein the card reader is configured to send the cryptogram, the identifier of the biometric card and a identifier of the card reader to the remote server via the communicating device and wherein the remote server is configured to perform a checking to verify that a pairing of the identifier of the biometric card and the identifier of the card reader has been previously registered and wherein the remote server is configured to send the admin code (49) and the user code value (48) to the communicating device only if said checking is successful.

13. The system according to claim 9, wherein said system comprises a card reader (20), wherein the biometric card sends the cryptogram to the card reader (20), wherein the card reader captures a request from the user using a user interface embedded (24) in the card reader, wherein the card reader sends the cryptogram and a reference of the request to the remote server via the communicating device, wherein the remote server identifies a user code value (48) depending on said reference of the request and wherein the communicating device includes the user code value (48) in said data only if said request is a request for changing the value of the PIN code.

14. The system according to claim 8, wherein the communicating device is configured to capture a request from the user using a user interface (34) embedded in the communicating device, wherein the communicating device is configured to send a reference of the request to the remote server, wherein the remote server is configured to identify a user code value (48) depending on said reference of the request and wherein the communicating device is configured to include the user code value (48) in said data only if said request is a request for changing the value of the PIN code.

15. The system according to claim 8, wherein the biometric card is configured to send an identifier of the biometric card to the communicating device, wherein the communicating device is configured to send both an identifier of the communicating device and the identifier of the biometric card to the remote server, wherein the remote server is configured to perform a checking to verify that a pairing of the identifier of the biometric card and the identifier of the communicating device has been previously registered and wherein the remote server is configured to send the admin code (49) and the user code value (48) to the communicating device only if said checking is successful.
